# EUROPÄISCHE PATENTSCHRIFT

(11) **EP 2 090 517 B1**
(45) Veröffentlichungstag und Bekanntmachung des Hinweises auf die Patenterteilung: **27.06.2012**
(21) Anmeldenummer: 09001602.3
(22) Anmeldetag: 05.02.2009
(51) Int. Cl.: B65D 6/02, B65D 39/08

(54) **Weithalsfass aus thermoplastischem Kunststoff**
Wide-mouthed thermoplastic barrel.
Tonneau à col large en matière thermoplastique.

(30) Priorität: 16.02.2008 DE 202008002185 U
(43) Veröffentlichungstag der Anmeldung: 19.08.2009
(73) Patentinhaber: Schütz GmbH & Co. KGaA, 56242 Selters (DE)
(72) Erfinder:
(74) Vertreter: advotec.

(56) Entgegenhaltungen:
- EP-A- 0 781 234
- EP-A- 1 007 420
- WO-A-91/12179
- GB-A- 999 833
- US-A- 4 941 584
- US-A- 5 971 189

## Beschreibung

Die Erfindung betrifft ein Weithalsfass aus thermoplastischem Kunststoff mit einem abnehmbaren Spunddeckel und einem Spannringverschluss (EP 0 781 234).

Der Erfindung liegt die Aufgabe zugrunde, den Spunddeckel des gattungsgemäßen Weithalsfasses derart auszubilden, dass der Verbindungsbereich kleiner und kompakter ausgeführt werden kann, sodass auch der Spannring kleiner sein kann.

Diese Aufgabe wird erfindungsgemäß gelöst durch ein Weithalsfass mit den Merkmalen des Patentanspruchs 1.

Die Unteransprüche beinhalten vorteilhafte und zweckmäßige Weiterbildungen der Erfindung.

Die Erfindung ist nachfolgend anhand von Zeichnungsfiguren erläutert, die folgendes darstellen:
- Fig. 1: eine perspektivische Darstellung des neuen Weithalsfasses mit Spunddeckel und Spannringverschluss,
- Fig. 2: eine Draufsicht des Fasses und

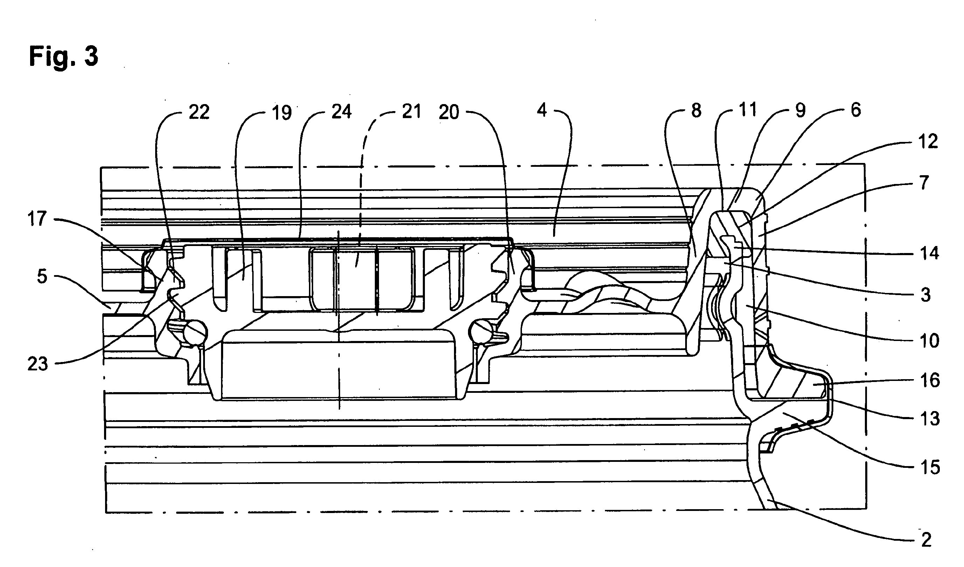

- Fig. 3: einen Teillängsschnitt des Fasses nach Linie III- III der Figur 2.

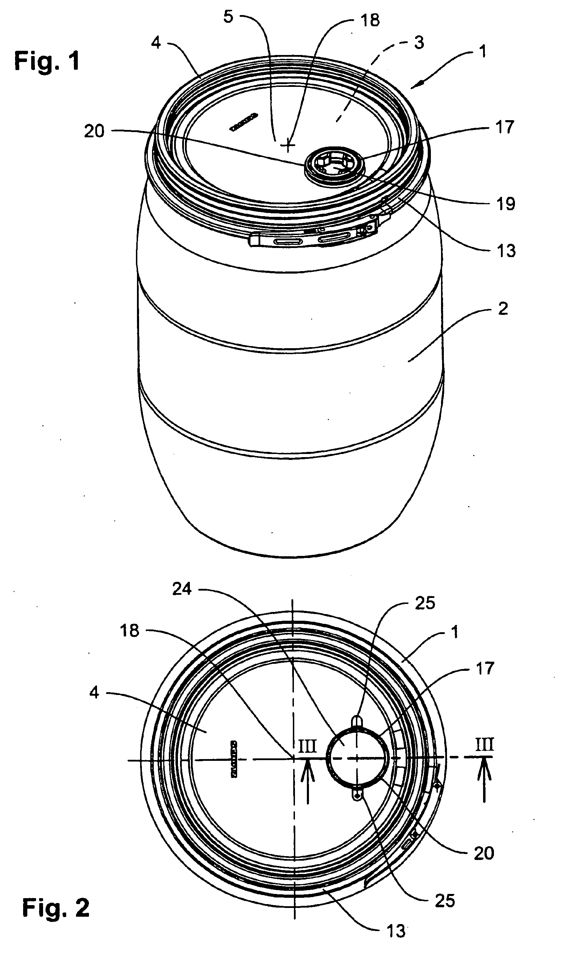

Das Weithalsfass 1 aus thermoplastischem Kunststoff nach Figur 1 besitzt einen zylindrischen Fasskörper 2 mit einer oberen Fassöffnung 3, die mittels eines Spunddeckels 4 verschließbar ist.

Der Spunddeckel 4 weist einen flachen Boden 5 mit einem hochstehenden Deckelrand 6 auf, der durch einen Außenrand 7 und einen Innenrand 8 sowie einen Außen- und Innenrand miteinander verbindenden Ringsteg 9 gebildet wird. Außen- und Innenrand 7, 8 des Spunddeckels 4 begrenzen einen nach unten offen Ringraum 10 mit einem Dichtungsbett 11, in das eine Deckeldichtung 12 eingelegt oder eingeschäumt ist. Der Spunddeckel 4 wird mit einem Spannring 13, der an einer mit Abstand unterhalb des Fassöffnungsrandes 14 angeformten Bordur 15 des Fasskörpers 2 und an einem Ringflansch 16 des Deckelaußenrandes 7 angreift, auf dem Fassöffnungsrand 14 befestigt, wobei der Spunddeckel 4 durch die Deckeldichtung 12 gegen den in den Ringraum 10 des Spunddeckels eintauchenden Fassöffnungsrandes 14 abgedichtet wird.

Der Spunddeckel 4 ist mit einem Befüll- und Entleerspund 17 ausgestattet, der vom Mittelpunkt 18 des Deckels nach außen versetzt ist und dessen durch einen Spundstopfen 19 verschließbarer Spundstutzen 20 über dem Spundloch 21 an dem flachen Deckelboden 5 angeformt ist.

Der Spundstutzen 20 des Befüll- und Entleerspundes 17 weist ein Sägezahn- Innengewinde 22 S70x6 zum Einschrauben des mit einem entsprechenden Sägezahn- Außengewinde 23 versehenen Spundstopfens 19 auf, der mit einer Siegelkappe 24 aus Stahl versiegelt wird, die mit zwei Aufreißlaschen 25 ausgestattet ist.

### Bezugszeichen

- 1: Weithalsfass
- 2: Fasskörper
- 3: Fassöffnung
- 4: Spunddeckel
- 5: Boden von 4
- 6: Deckelrand von 4
- 7: Außenrand von 6
- 8: Innenrand von 6
- 9: Ringsteg von 6
- 10: Ringraum zwischen 7 und 8
- 11: Dichtungsbett in 10
- 12: Deckeldichtung in 11
- 13: Spannring
- 14: Fassöffnungsrand
- 15: Bordur an 2
- 16: Ringflansch an 7
- 17: Befüll- und Entleerspund von 4
- 18: Mittelpunkt von 4
- 19: Spundstopfen
- 20: Spundstutzen von 17
- 21: Spundloch von 17
- 22: Sägezahn- Innengewinde von 20
- 23: Sägezahn- Außengewinde von 19
- 24: Siegelkappe von 19
- 25: Aufreißlasche an 24

## Patentansprüche

1. Weithalsfass aus thermoplastischem Kunststoff mit einem abnehmbaren Spunddeckel, der mit einem Spannring (13) auf einem Fassöffnungsrand befestigt ist und einen flachen oder leicht gewölbten Deckelboden (5) aufweist, mit einem hochstehenden Deckelrand (6) zum Befestigen des Spunddeckels (4) auf dem Fassöffnungsrand (14), und mit einer vom Mittelpunkt (18) des Spunddeckels (4) nach außen versetzten Anordnung eines durch einen Spundstopfen (19) verschließbaren Spundstutzens (20) eines Befüll- und Entleerspundes (17) des Spunddeckels (4),
**dadurch gekennzeichnet,**
**dass** der Spannring derart befestigt ist, dass er sowohl an einer mit Abstand unterhalb des Fassöffnungsrands angeformten Bordur (15) des Fasskörpers (2) als auch an einem Ringflansch (16) des Deckelaußenrands (7) angreift.

2. Weithalsfass nach Anspruch 1, **dadurch gekennzeichnet, dass** der Spundstutzen (20) ein Sägezahn- Innengewinde (22) S70x6 zum Einschrauben des mit einem entsprechenden Sägezahn-Außengewinde (23) versehenen Spundstopfens (19) aufweist.

3. Weithalsfass nach Anspruch 1 und 2, **gekennzeichnet durch** eine Versiegelung des Spundstopfens (19) mit einer Siegelkappe (24) aus Stahl.

## Claims

1. Wide-necked drum made of thermoplastic material comprising a removable bung lid which is fastened by a clamping ring (13) to a drum opening rim and has a planar or slightly bulged lid base (5), comprising an upwardly protruding lid rim (6) for fastening the bung lid (4) onto the drum opening rim (14) and having an arrangement, offset outwardly from the central point (18) of the bung lid (4), of a bung socket (20) of a filling and emptying bung (17) of the bung lid (4), said bung socket being able to be sealed by a bung plug (19), **characterized in that** the clamping ring is fastened such that it acts both on a border (15) of the drum body (2) which is integrally formed at a distance below the drum opening rim and on an annular flange (16) of the lid outer rim (7).

2. Wide-necked drum according to Claim 1, **characterized in that** the bung socket (20) comprises a saw-tooth internal thread (22) S70x6 for screwing-in the bung plug (19) provided with a corresponding saw-tooth external thread (23).

3. Wide-necked drum according to Claim 1 and 2, **characterized by** the bung plug (19) being sealed by a sealing cap (24) made of steel.

## Revendications

1. Fût à goulot large en matière thermoplastique, avec un couvercle amovible à bonde, qui à l'aide d'une bague de serrage (13) est fixé sur un bord d'ouverture du fût et avec un fond de couvercle plat (5) ou légèrement bombé, avec un bord de couvercle (6) relevé, pour la fixation du couvercle à bonde (4) sur le bord d'ouverture du fût (14) et avec une disposition déportée du point central (18) du couvercle à bonde (4) vers l'extérieur, d'une tubulure de bonde (20) d'une bonde de remplissage et de vidange (17) fermable par un bouchon de bonde (19) du couvercle à bonde (4), **caractérisé en ce que**
la bague de serrage est fixée de telle sorte qu'elle s'engage aussi bien sur une bordure (15) rapportée avec un écart en-dessous du bord d'ouverture du fût (2) que sur une bride annulaire (16) du bord extérieur du couvercle (7).

2. Fût à goulot large selon la revendication 1, **caractérisé en ce que** la tubulure de bonde (20) comporte un taraudage en dents de scie (22) S70x6, pour le vissage du bouchon de bonde (19) muni d'un filetage correspondant en dents de scie (23).

3. Fût à goulot large selon la revendication 1 et 2, **caractérisé par** un scellement du bouchon de bonde (19) avec un capuchon de scellement (24) en acier.
